# EUROPEAN PATENT APPLICATION

(11) **EP 1 393 844 A2**
(43) Date of publication of application: **03.03.2004**
(21) Application number: 03255353.9
(22) Date of filing: 28.08.2003
(51) Int. Cl.: B23H 7/10, B23H 7/02

(54) **Wire electric discharge machine**

(30) Priority: 30.08.2002 JP 2002252895
(71) Applicant: FANUC LTD, Minamitsuru-gun, Yamanashi 401-0597 (JP)
(72) Inventor: Arakawa, Yasuo, Minamitsuru-gun Yamanashi, 401-0511 (JP)
(74) Representative: Billington, Lawrence Emlyn

(57) **Abstract**

A wire electric discharge machine capable of preventing breakage of a wire (7) and performing an automatic wire connection/extension process in machining a wall portion of a concave, a groove (12), a hole, etc. formed on a workpiece (4). A wire turning unit (8) is attached to one of an upstream wire guide unit (1) and a downstream wire guide unit (2). The wire turning unit (8) has a first wire turning guide (9a) and a second wire turning guide (9b). The first wire turning guide (9a) turns the wire (7) fed from the upstream wire guide unit (1) towards the second wire turning guide (9b), and the second wire turning guide (9b) turns the wire (7) towards the downstream wire guide unit (2). After aligning the upstream wire guide unit (1) and the downstream wire guide unit (2), the wire (7) is automatically connected therebetween. The upstream wire guide unit (1) is moved such that the wire (7) is successively caught by the first wire turning guide (9a) and the second wire turning guide (9b). The number of turnings of the wire (7) and thus a load exerted on the wire (7) are reduced to lower possibility of breakage of the wire (7).

## Description

### BACKGROUND OF THE INVENTION

### 1. Field of the Invention

The present invention relates to a wire electric discharge machine particularly useful in machining a portion of a workpiece having a concave, a groove or a hole.

### 2. Description of Related Art

Wire electric discharge machining is performed by applying an electric voltage between a workpiece and a wire electrode, which extends between an upstream wire guide and a downstream wire guide to confront the workpiece with a minute gap therebetween, to cause an electric discharge in the gap while feeding the wire to run from the upstream wire guide to the downstream wire guide.

There is known a wire electric discharge machine for machining a wall portion of a concave, a groove or a hole formed on a workpiece by turning a path of the wire from the upstream wire guide to the downstream wire guide from JP 62-88516A, JP 59-167627U, JP 4-122420U.

In these wire electric discharge machines for machining a wall portion of a workpiece, the wire path is formed into a staple-shape by turning the wire four times from the upstream wire guide to the downstream wire guide. Since the wire is turned by a large number of times in the wire path, a load of tensile force exerted on the wire is increased to cause breakage of the wire frequently in the midst of machining.

Further, when a breakage of the wire occurs in the midst of machining, the wire can not automatically reconnected between the upstream wire guide and the downstream wire guide because of the complicated wire path therebetween, to hinder the continuous automatic machining for a long time which is an advantageous feature of the wire electric discharge machine.

### SUMMARY OF THE INVENTION

The present invention provides a wire electric discharge machine capable of preventing breakage of a wire by reducing a load of tensile force on the wire in machining a portion of a workpiece having a concave, a groove or a hole, and also automatically connecting/extending the wire between an upstream wire guide and a downstream wire guide.

According to one aspect of the present invention, a wire electric discharge machine comprises: an upstream wire guide from which a wire is fed; a downstream wire guide unit; a wire turning unit having a first wire turning guide and a second wire turning guide. The first wire turning guide turns the wire from the upstream wire guide towards the second wire turning guide, and the second wire turning guide turns the wire turned by the first wire turning guide towards the downstream wire guide.

The wire turning unit may have a plurality of sets of the first wire turning guides and the second wire turning guides, to be used selectively.

The wire turning unit may be arranged rotatable around one of the upstream wire guide and the downstream wire guide and also fixable at predetermined rotational positions. Alternatively, the wire turning unit may be arranged detachable to be fixed at a predetermined rotational position with respect to one of said upstream wire guide and said downstream wire guide.

According to another aspect of the present invention, a wire electric discharge machine comprises: an upstream wire guide from which a wire is fed; a downstream wire guide; a wire turning unit for turning the wire from the upstream wire guide towards said downstream wire guide such that a projected position of said upstream wire guide is displaced from a projected position of said downstream wire guide on a plane perpendicular to a feeding direction of the wire.

The wire turning unit may comprise at least two wire guides in the form of circular arc for turning the wire at approximately right angle.

The wire turning unit may have a L-shape or a T-shape.

The wire electric discharge machine may further comprise automatic wire connecting means for automatically connecting the wire between the upstream wire guide and the downstream wire guide, and wire extending means for extending the connected wire to be engaged with the first wire turning guide and the second wire turning guide along the wire turning unit by moving the upstream wire guide and the downstream wire guide relative to each other.

The automatic wire connecting means may perform an automatic wire connection after aligning the upstream wire guide and the downstream wire guide such that projected positions of the upstream wire guide and the downstream wire guide substantially coincide with each other on a plane perpendicular to a feeding direction of the wire.

The upstream wire guide and the downstream wire guide are arranged movable relative to each other on a plane perpendicular to a feeding direction of the wire to be capable of performing a taper machining.

### BRIEF DESCRIPTION OF THE DRAWINGS

FIG. 1 is an elevation view of a principal part of a wire electric discharge machine according to an embodiment of the present invention;
FIG. 2 is a top plan view of the wire electric discharge machine with an upstream wire guide unit omitted;
FIG. 3a and FIG. 3b are a side view and an elevation view, respectively, of a second wire turning guide, and FIG. 3c is an elevation view of a first wire turning guide;
FIG. 4 is a block diagram of a controller of the wire electric discharge machine;
FIG. 5 is a flowchart of an automatic wire connection/extension process;
FIG. 6a and FIG. 6b are an elevation view and a plan view, respectively, of the upstream wire guide unit, a wire turning unit and a downstream wire guide unit at a first stage of the automatic wire connection/extension process;
FIG. 7a and FIG. 7b are an elevation view and a plan view, respectively, showing a second stage of the automatic wire connection/extension process;
FIG. 8a and FIG. 8b are an elevation view and a plan view, respectively, showing a third stage of the automatic wire connection/extension process;
FIG. 9a and FIG. 9b are an elevation view and a plan view, respectively, showing a fourth stage of the automatic wire connection/extension process;
FIG. 10a and FIG. 10b are an elevation view and a plan view, respectively, showing a final stage of the automatic wire connection/extension process;
FIG. 11 is an elevation view of a principal part of the wire electric discharge machine in different arrangement of the upstream wire guide unit, the wire turning unit and the downstream wire guide unit;
FIG. 12 is an elevation view of a principal part of the wire electric discharge machine according to another embodiment of the present invention; and
FIG. 13a and FIG. 13b are an elevation view and a plan view, respectively, of a different wire turning unit according to still another embodiment of the present invention.

### DETAILED DESCRIPTION

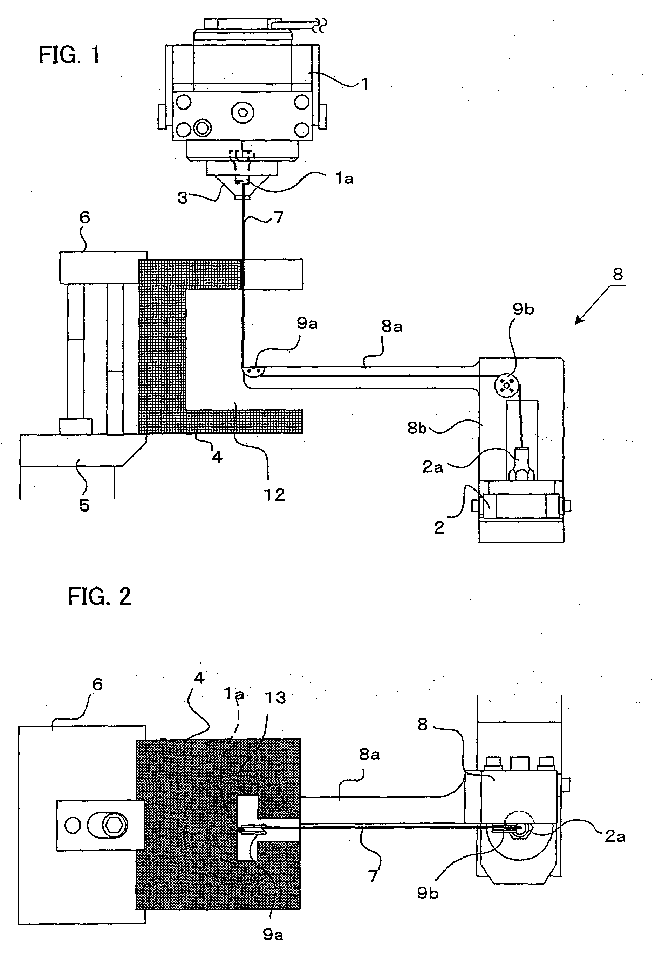

FIGS. 1 and 2 show a wire electric discharge machine in a state of machining a wall portion of a groove 12 formed on a workpiece 4. As shown in FIGS. 1 and 2, an upstream wire guide unit 1 has a nozzle 3 and an upstream wire guide 1a arranged in the nozzle 3. A downstream wire guide unit 2 has a downstream wire guide 2a. A workpiece 4 is mounted on a table 5 by a mounting jig 6.

In this embodiment, a wire turning unit 8 is provided on the downstream wire guide unit 2. The wire turning unit 8 comprises a base 8b attached to the wire guide unit 2 and an arm 8a in the form of a rod to extend laterally from the base 8b at an approximately right angle therewith. A first wire turning guide 9a is provided at a distal end of the arm 8a and a second wire turning guide 9b is provided at the base 8b in the vicinity of a proximal end of the arm 8a and above the downstream wire guide 2a.

As clearly shown in FIG. 2, a projected position of the upstream wire guide 1a is displaced from a projected position of the downstream wire guide 2a on a plane perpendicular to a feeding direction of the wire 7.

The wire 7 extends from the upstream wire guide 1a and is turned at an approximately 90 degree by the first wire turning guide 9a towards the second wire turning guide 9b, and then turned at an approximately 90 degree by the second wire turning guide 9b towards the downstream wire guide 2a to reach the downstream wire guide 2a.

Since the arm 8a is in the form of a rod, the arm 8a can be inserted into a groove, a concave and a hole formed in a workpiece to enable wire electric discharge machining on a wall portion by the wire extending between an outside and an outside of the groove, concave and hole. In this example of wire electric discharge machining, a wire electric discharge machining operation is performed on the upper wall portion by the wire extending between the upstream wire guide 1a positioned outside the workpiece 4 and the first wire turning guide 9a positioned inside the groove 12 formed in the workpiece 4 to cut the wall portion to form a T-shaped cutout 13.

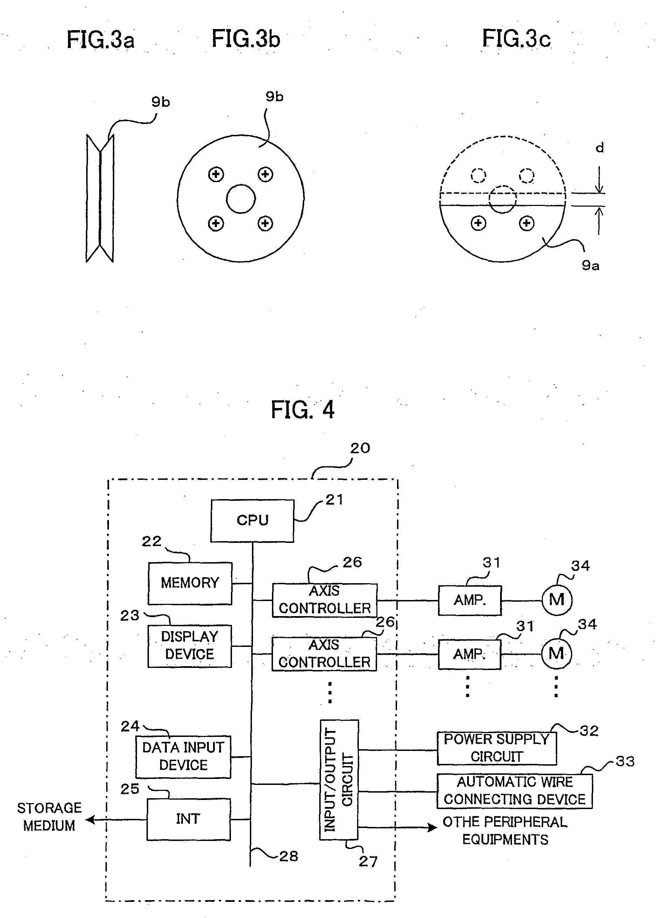

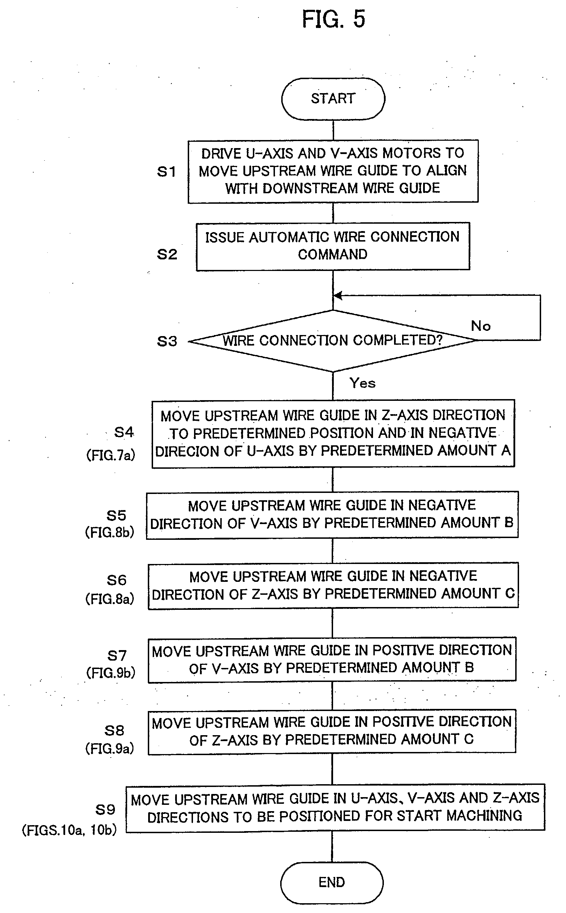

V-grooved guides are adopted as the first and second wire turning guides 9a and 9b. A circular guide is adopted as the second wire turning guide 9b as shown in FIGS. 3a and 3b, and a semicircular guide obtained by cutting off a central portion of a width "d" in the circular guide is adopted as the first wire turning guide 9 a as shown in FIG. 3c.

Since the second wire turning guide 9b has a circular shape, the second wire turning guide 9b may be attached to the body 8b of the wire turning unit 8 to be rotatable or stationarily. Since the first wire turning guide 9a has a semicircular shape, the first wire turning guide 9a is fixed to the distal end of the arm 8a. The wire 7 runs sliding on the groove of the first wire turning guide 9a, and also the groove of the second wire turning guide 9b in the case where the second wire turning guide 9b is fixed. Therefore, the V-grooves of the first and second wire turning guides 9a and 9b are formed with hard material such as sapphire. The angle of turning the wire 7 by the first and second wire turning guides 9a and 9b is not larger than 90 degrees and thus a contacting range of the wire 7 and the first and second wire turning guides 9a and 9b is within an angle of 90 degree. Thus, when the V-groove of the second wire turning guide 9b contacting with the wire 7 is worn, an unworn V-groove can be used by remounting the second wire turning guide 9b after turning by 90 degrees. When the V-groove of the first wire turning guide 9a is worn, a new first wire turning guide as a remaining half formed by dividing the circular wire turning guide can be used.

A controller of the wire electric discharge machine for performing an automatic wire connection/extension process according to the embodiment is shown in FIG. 4. A controller 20 may be a numerical controller for controlling the wire electric discharge machine for performing wire electric discharge machining. The controller 20 comprises a processor 21, a memory 22 including a ROM and a RAM, a display device 23, a data input device 24 such as a keyboard, an interface 25 for input/output of data such as machining programs from an external storage medium, axis controllers 26 and an input/output circuits 27 which are connected to the processor 21 through a bus 28.

The axis controllers 26 control X-axis and Y-axis motors for driving a table 5 on which the workpiece 4 is mounted in X-axis and Y-axis directions perpendicular to each other, a Z-axis motor for driving the upstream wire guide unit 1 in a Z-axis direction perpendicular to the X-axis and the Y-axis, U-axis and V-axis motors for driving the upper guide unit 1 in U-axis and V-axis directions perpendicular to each other for performing a taper machining. The axis controllers 26 comprises feedback control sections for positions, velocities and currents of the respective axes. Servomotors 34 for respective axes are connected to the axis controllers 26 through servo amplifiers 31. Position/velocity detectors are provided at the respective servomotors 34 to feedback position/velocity signals to the respective servo controllers 26.

The input/output circuit 27 is connected with a power supply circuit 32 for supplying electric voltage between the wire 7 and the workpiece 4, an automatic wire connection device 33 for automatically connecting a wire between the upstream wire guide 1a and the downstream wire guide 2a, and other peripheral equipments.

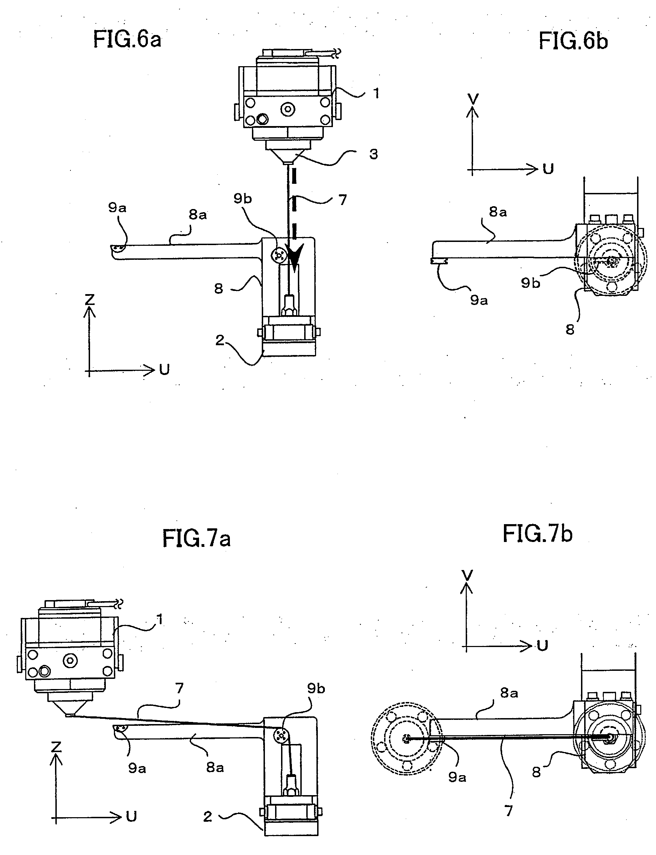

An operation of the wire electric discharge machine in performing automatic wire connection/extension process will be described referring to the flowchart of FIG. 5 and diagrams of FIG. 6a through FIG. 10b. In FIGS. 6a, 7a, 8a, 9a and 10a, a direction from above to below on the sheet is set as a positive direction of the Z-axis, a direction from left to right on the sheet is set as a positive direction of the U-axis, and a direction perpendicular to a plane of the sheet from front to behind is set as a positive direction of the V-axis.

In this embodiment, the arm 8a extends in the negative direction of the U-axis from the body 8b such that the first wire turning guide 9a at the distal end of the arm 8a is arranged displaced in the negative direction of the U-axis with respect to the second wire turning guide 9b and the downstream wire guide 2a.

If the wire is broken in the midst of machining, a wire cutting off operation is performed and then an automatic wire connection command is issued. An automatic wire connection command is also issued at a start of machining. When the automatic wire connection command is issued, the processor 21 of the controller 20 starts the processing as shown in FIG. 5.

First, the upstream wire guide unit 1 is moved such that a wire lead-out hole of the upstream wire guide 1a aligns with a wire lead-in hole of the downstream wire guide 2a.

There are wire electric discharge machines of a type in which a workpiece is stationarily mounted on a table and the upstream and downstream wire guides are moved in the directions of the X-axis and Y-axis for supplying machining feed and one of the upstream and downstream wire guides is moved in the Z-axis direction for adjustment of a distance between the upstream and downstream wire guides, and a type in which the table is moved in the directions of the X-axis and Y-axis for supplying machining feed and one of the upstream and downstream wire guides moves in the Z-axis direction. In either type of the wire electric discharge machine, there is an arrangement where one of the upstream and downstream wire guides is moved in the U-axis and V-axis directions perpendicular to each other in a plane parallel to the X-Y plane, for performing a taper machining.

In this embodiment, the table 5 is moved in the X-axis and Y-axis directions and the upstream wire guide unit 1 is moved in the Z-axis direction and also in the U-axis and V-axis directions.

As shown in FIG. 6, the upstream wire guide unit 1 is moved such that a wire lead-out hole of the upstream wire guide 1a aligns with a wire lead-in hole of the downstream wire guide 2a on a straight line parallel to the Z-axis by driving the U-axis motor and the V-axis motor (Step 1).

Then, an automatic wire connection command is issued to the automatic wire connection device 33 (Step S2), so that the wire 7 extends from the upstream wire guide 1a to the downstream wire guide 2a by the function of the automatic wire connection device 33. The automatic wire connection device 33 is well known in the art as disclosed in Japanese Patent No. 3235915, for example. The automatic wire connection device 33 performs a function of connecting the wire by spouting a jet of machining fluid from the nozzle 3 at the upstream wire guide unit 1 to restrict a direction of the wire being fed from the upstream wire guide 1a so that the wire 7 is led to the downstream wire guide 2a to extend between the upstream wire guide 1a and the downstream wire guide 2a.

When a signal indicating completion of the wire connection is received from the automatic wire connection device 33 (Step S3), the upstream wire guide unit 1 is moved such that the wire 7 is caught by the second wire turning guide 9b, as shown in FIGS. 7a and 7b. Particularly, the upstream wire guide unit 1 is moved in the Z-axis direction to a predetermined position and then moved in the negative direction of the U-axis by a predetermined amount A to a position beyond the first wire turning guide 9a (Step S4). Since the second wire turning guide 9b and the downstream wire guide 2a are arranged at the same position in the V-axis direction (on the same plane parallel to the U-Z plane), the wire 7 is caught by the V-groove of the second wire turning guide 9b by the movement of the upstream wire guide unit 1 in the negative direction on the U-axis.

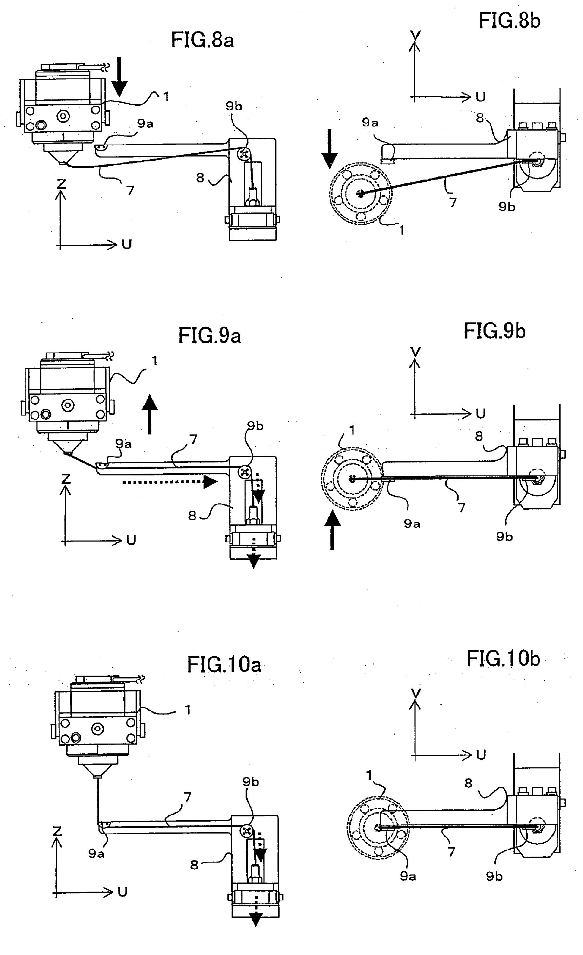

Then, the upstream wire guide unit 1 is moved in the negative direction of the V-axis (which is a direction of a side of the arm 8a from which the first wire turning guide 9a projects) by a predetermined amount B so that the wire 7 is not brought into contact with the first wire turning guide 9a when the upper wire guide unit 1 is moved downwards (Step S5). Then, the upstream wire guide unit 1 is moved in the negative direction of the Z-axis by a predetermined amount C such that the position of the upper wire guide 1a is lower than the position of the circumference of the first wire turning guide 9a in the Z-axis, as shown in FIGS. 8a and 8b (Step S6).

Then, the upstream wire guide unit 1 is moved in the positive direction of the V-axis opposite to the negative direction of the movement in Step S5 by the predetermined amount B (Step S7), and the upstream wire guide unit 1 is moved in the positive direction of the Z-axis by the predetermined amount C so that the wire 7 is caught by the first wire turning guide 9a, as shown in FIGS. 9a and 9b (Step S8).

Then, the U-axis and Z-axis motors are driven so that the upstream wire guide unit 1 is moved to a predetermined position for starting a wire electric discharge machining operation, as shown in FIGS. 10a and 10b, to terminate the wire extending operation (Step S9).

The above described wire extending operation can be performed manually. However, the automatic wire connection/extension process by the controller of the wire electric discharge machine enables an automatic recovery of wire connection when the wire breaks in the midst of an automatic wire electric discharge machining. The wire electric discharge machining is performed by moving the table 5 in the X-axis and Y-axis directions and also in the U-axis and V-axis directions for a taper machining on the wall of the concave, groove, hole, etc. of the workpiece according to the machining program.

In the foregoing embodiment, the wire turning unit 8 is attached to the downstream wire guide unit 2. However, the wire turning unit 8 may be attached to the upstream wire guide unit 1.

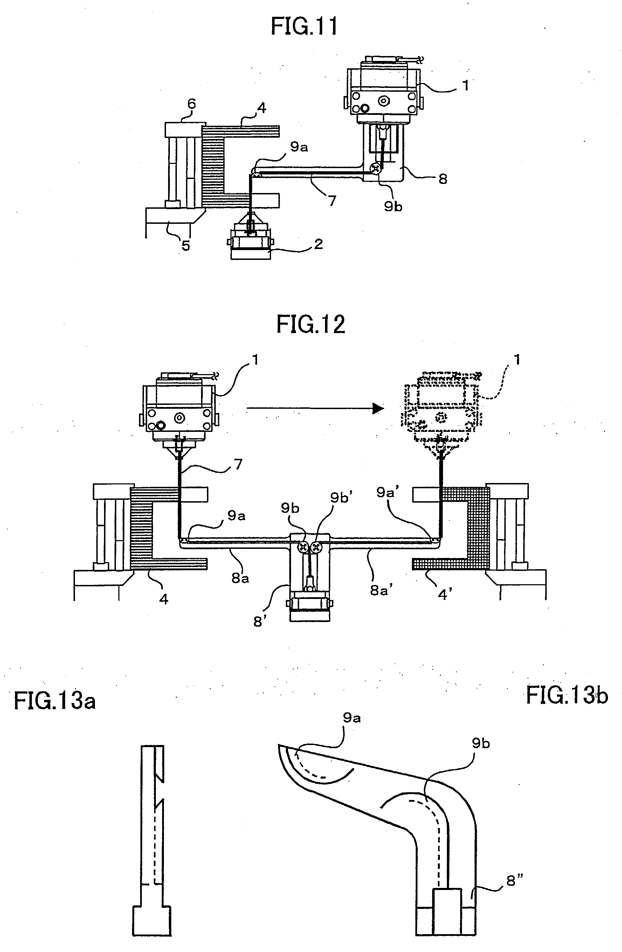

The wire turning unit 8 has a L-shape in the foregoing embodiment. However, the wire turning unit 8 may have a T-shape as shown in FIG. 12. In the embodiment shown in FIG. 12, a wire turning unit 8' has two arms 8a and 8a' extending in opposite directions. Two first wire turning guides 9a and 9a' are provided at distal ends of the two arms 8a and 8a', and two second wire turning guides 9b and 9b' are provided at a base in the vicinities of the two arms 8a and 8a'.

In this embodiment, in the case where an opening of the groove of the workpiece 4 is directed to the right in FIG. 12, the first wire turning guide 9a at the distal end of the arm 8a is inserted into the groove of the workpiece 4 to perform a wire electric discharge machining on a wall portion of the groove of the workpiece 4.

In the case where an opening of the groove of the workpiece 4' mounted on the table 5 by jigs is directed to the left, the first wire turning guide 9a' at the distal end of the arm 8' is inserted into the groove of the workpiece 4' to perform a wire electric discharge machining on a wall portion of the groove of the workpiece 4'.

Thus, the wall portions of the openings of the grooves of the workpiece at opposite faces can be machined without changing orientation of the workpiece mounted on the table 5. Further, a plurality of sets of the first and second wire turning guides may be provided on the wire turning guide supporting member 8.

In the foregoing embodiment, the first and second wire guides are provided in the wire turning unit 8. The first and second wire tuning guides can be formed integrally. A wire turning member 8" as show in FIG. 13 is formed as an integral body including a first wire turning guide 9a and a second wire turning guide 9b by sapphire. The wire turning member 8" is attached to the upstream wire guide unit 1 or the downstream wire guide unit 2. The wire turning member 8" is formed into a substantial L-shape having a groove in the form of a circular arc for guiding the wire fed from the upstream wire guide by turning the wire by the first wire turning guide 9a at the distal end by approximately 90 degrees, and then turning the second wire turning guide 9b near the proximal end by approximately 90 degrees.

The wire fed from the upstream wire guide 1a is turned by the first wire turning guide 9a towards the second wire turning guide 9b and is turned by the second wire turning guide 9b towards the downstream wire guide 2a.

Further, the wire turning guide unit 8 may be mounted rotatably to be fixable at a desired rotational position on the upstream wire guide unit 1 or the downstream wire guide unit 2 so that the direction of the arm 8a is changeable. Alternatively, the wire turning guide unit 8 may be detachably mounted on the upstream wire guide unit 1 or the downstream wire guide unit 2 at a desired rotational position.

According to the present invention, since the number of turnings of the wire is made smaller than that in the prior art, the load exerted on the wire is reduced to lower possibility of breakage of the wire. In an electric discharge machining between the wire and the workpiece, a minute vibration caused by leaning of the wire or sliding resistance is reduced to achieve precise machining. The wire turning unit can be attached to one of the upstream wire guide unit or the downstream wire guide unit of a conventional wire electric discharge machine, to enhance the function of the conventional wire electric discharge machine.

Furthermore, stoppage of electric discharge machining caused by breakage of the wire in the midst of machining can be automatically restored by the automatic wire connection/extension function to enable a continuous automatic machining operation for a long time.

## Claims

1. A wire electric discharge machine for machining a workpiece by electric discharge between the workpiece and a wire, comprising:
an upstream wire guide from which the wire is fed;
a downstream wire guide unit;
a wire turning unit having a first wire turning guide and a second wire turning guide, said first wire turning guide turning the wire from said upstream wire guide towards said second wire turning guide, and said second wire turning guide turning the wire turned by said first wire turning guide towards said downstream wire guide.

2. A wire electric discharge machine according to claim 1, wherein said wire turning unit has a plurality of sets of the first wire turning guides and the second wire turning guides, to be used selectively.

3. A wire electric discharge machine according to claim 1, wherein said wire turning unit is arranged rotatable around one of said upstream wire guide and said downstream wire guide and also fixable at predetermined rotational positions.

4. A wire electric discharge machine according to claim 1, wherein said wire turning unit is arranged detachable to be fixed at a predetermined rotational position with respect to one of said upstream wire guide and said downstream wire guide.

5. A wire electric discharge machine according to claim 1, further comprising automatic wire connecting means for automatically connecting the wire between said upstream wire guide and said downstream wire guide, and wire extending means for extending the connected wire to be engaged with said first wire turning guide and said second wire turning guide by moving said upstream wire guide and said downstream wire guide relative to each other.

6. A wire electric discharge machine according to claim 5, wherein said automatic wire connecting means performs an automatic wire connection after aligning said upstream wire guide and said downstream wire guide such that projected positions of said upstream wire guide and said downstream wire guide substantially coincide with each other on a plane perpendicular to a feeding direction of the wire.

7. A wire electric discharge machine according to claim 1, wherein said upstream wire guide and said downstream wire guide are arranged movable relative to each other on a plane perpendicular to a feeding direction of the wire to be capable of performing a taper machining.

8. A wire electric discharge machine for machining a workpiece by electric discharge between the workpiece and a wire, comprising:
an upstream wire guide from which the wire is fed;
a downstream wire guide;
a wire turning unit for turning the wire from said upstream wire guide towards said downstream wire guide such that a projected position of said upstream wire guide is displaced from a projected position of said downstream wire guide on a plane perpendicular to a feeding direction of the wire.

9. A wire electric discharge machine according to claim 8, wherein said wire turning unit comprises at least two wire guides in the form of circular arc for turning the wire at approximately right angle.

10. A wire electric discharge machine according to claim 8, wherein said wire turning unit has a L-shape.

11. A wire electric discharge machine according to claim 8, wherein said wire turning member has a T-shape.

12. A wire electric discharge machine according to claim 8, further comprising automatic wire connecting means for automatically connecting the wire between said upstream wire guide and said downstream wire guide, and wire extending means for extending the connected wire along said wire turning unit by moving said upstream wire guide and said downstream wire guide relative to each other.

13. A wire electric discharge machine according to claim 12, wherein said automatic wire connecting means performs an automatic wire connection after aligning said upstream wire guide and said downstream wire guide such that projected positions of said upstream wire guide and said downstream wire guide substantially coincide with each other on a plane perpendicular to a feeding direction of the wire.

14. A wire electric discharge machine according to claim 8, wherein said upstream wire guide and said downstream wire guide are arranged movable relative to each other on a plane perpendicular to a feeding direction of the wire to be capable of performing a taper machining.
